# EUROPEAN PATENT APPLICATION

(11) **EP 3 132 994 A1**
(43) Date of publication of application: **22.02.2017**
(21) Application number: 15780551.6
(22) Date of filing: 02.04.2015
(51) Int. Cl.: B62D 3/12, F16H 55/28

(54) **RACK GUIDE AND RACK-AND-PINION STEERING DEVICE PROVIDED WITH SAME RACK GUIDE**

(30) Priority: 14.04.2014 JP 2014083226
(71) Applicant: Oiles Corporation, Tokyo 108-0075 (JP)
(72) Inventor: KIKUCHI, Hiroyuki, Fujisawa-shi Kanagawa 252-0811 (JP); SAKAIRI, Yoshikazu, Fujisawa-shi Kanagawa 252-0811 (JP)
(74) Representative: Jackson, Martin Peter
(86) International application number: PCT/JP2015/001886
(87) International publication number: WO 2015/159495

(57) **Abstract**

A rack-and-pinion type steering apparatus 1 includes a pinion 2 which is rotatable in an R direction; a rack bar 4 which has rack teeth 3 meshing with the pinion 2 and is linearly movable in a sliding direction A; a gear box 5 for rotatably supporting the pinion 2 in the R direction; a rack guide 6 for slidably supporting the rack bar 4; and a resilient means 7 for pressing the rack guide 6 toward the pinion 2.

## Description

### TECHNICAL FIELD

The present invention relates to a rack guide for slidably supporting a rack bar of a steering mechanism of a motor vehicle and a rack-and-pinion type steering apparatus having the rack guide.

### BACKGROUND ART

As a steering gear apparatus in a steering system for a vehicle, a rack-and-pinion type steering apparatus is known in which rack teeth of a rack bar are meshed with a pinion at a distal end of a steering gear shaft inside a gear box, and the rack bar is adapted to be moved in its axial direction by the rotation of the steering gear shaft through the pinion and the rack teeth, and in which, inside a cylindrical portion of the gear box, a rack guide is disposed at a portion of the rack bar opposite to the portion thereof meshing with the pinion, in such a manner as to be brought into slidable contact with an inner peripheral surface of the cylindrical portion, and a compression coil is interposed between the rack guide and a closure member for closing an opening of the cylindrical portion.

In the rack-and-pinion type steering apparatus having such a structure, in order to allow the rack guide to slide reliably with respect to the cylindrical portion without causing stick-slip, a clearance is provided between the inner peripheral surface of the cylindrical portion and the outer peripheral surface of the rack guide by taking machining errors into consideration.

### PRIOR ART DOCUMENTS

### PATENT DOCUMENTS

Patent Document 1: microfilm of Japanese Utility Model Application No. 56-115067
Patent Document 2: JP-A-6-239245
Patent Document 3: JP-A-2000-177604

### SUMMARY OF THE INVENTION

### PROBLEMS THAT THE INVENTION IS TO SOLVE

If a vehicle equipped with such a rack-and-pinion type steering apparatus is made to travel on a rough road or a road surface having a level difference, the rack bar undergoes deflection about an axis thereof due to the reaction force applied from the road surface through the wheels, and if the clearance between the outer peripheral surface of the rack guide and the inner peripheral surface of the cylindrical portion is large, the movement of the rack guide in the radial direction becomes large. Hence, there is a problem in that the noise of collision between the outer peripheral surface of the rack guide and the inner peripheral surface of the cylindrical portion and the noise of collision between the rack teeth and the teeth of the pinion become large.

Accordingly, annular elastic members such as O-rings are interposed between the rack guide and the cylindrical portion to restrict the movement of the rack guide in the radial direction by the annular elastic members (Patent Document 1 and Patent Document 2). However, as a result of the fact that the annular elastic members fitted on the rack guide completely closes the clearance which functions as an air passage between the inner peripheral surface of the cylindrical portion and the outer peripheral surface of the rack guide, the circulation of air effected through the clearance by the movement of the rack guide with respect to the cylindrical portion becomes difficult, and the space between the closure member and the end face of the rack guide forms a sealed air chamber. Speedy movement of the rack guide with respect to the cylindrical portion is hampered due to this sealed air chamber, with the result that the support of the rack bar by the rack guide becomes insufficient, and in the event that vibration is transmitted to the rack bar, a backlash occurs between the pinion and the rack teeth of the rack bar, thereby possibly producing tooth hammering noise.

The present invention has been devised in view of the above-described aspects, and its object is to provide a rack guide which can prevent the sealed air chamber from being formed between the closure member and the end face of the rack guide, is hence able to move speedily with respect to the cylindrical portion, is able to respond to the displacement of the rack bar in the radial direction perpendicular to a moving direction of the rack bar, and in which a backlash and tooth hammering noise between the pinion and the rack teeth of the rack bar are not generated, as well as a rack-and-pinion type steering apparatus having such a rack guide.

### MEANS FOR SOLVING THE PROBLEMS

A rack guide in accordance with the present invention comprises: a slider including a slider body having a sliding surface on one surface thereof and a fixing surface on another surface thereof and a projecting portion formed integrally with the fixing surface; a rack guide base body including one axial end face having a supporting surface, an axial other end face, a hollow portion which is open at the other end face, and a fitting hole portion which is open at the supporting surface on one side thereof and communicates with the hollow portion on another side thereof and in which the projecting portion of the slider is fitted; at least one annular elastic member fitted on the rack guide base body in such a manner as to radially project from a radially outer peripheral surface of the rack guide base body; and passage means having one end open at an outer peripheral edge of the slider body and another end communicating with the hollow portion of the rack guide base body, wherein the slider has the fixing surface in contact with the supporting surface of the rack guide base body and is fixed to the rack guide base body at the fixing surface, the annular elastic member is disposed between the one end of the passage means and the other end face of the rack guide base body, as viewed in an axial direction, and the passage means includes a first groove formed in an outer peripheral surface of the projecting portion of the slider and a second groove formed in the fixing surface of the slider body and having one end communicating with the first groove and another end open at the outer peripheral edge of the slider body.

According to the rack guide in accordance with the present invention, since at least one annular elastic member is fitted on the rack guide base body in such a manner as to radially project from the radially outer peripheral surface of the rack guide base body, in the fitting of the rack guide into the cylindrical portion of the rack-and-pinion type steering apparatus, it is possible to eliminate the direct contact of the rack guide base body with the inner peripheral surface of the cylindrical portion. Furthermore, the passage means at one end thereof is open at the outer peripheral edge of the slider body, and the passage means at the other end thereof communicates with the hollow portion of the rack guide base body, and the annular elastic member is disposed between the one end of the passage means and the other end face of the rack guide base body, as viewed in the axial direction, so that the one end face side and the other end face side of the rack guide base body can be made to communicate with each other. Thus, it is possible to provide a rack guide which can prevent the sealed air chamber from being formed between the closure member and the other end face of the rack guide, is hence able to move speedily with respect to the cylindrical portion of the rack-and-pinion type steering apparatus, is able to respond to the displacement of the rack bar in the radial direction perpendicular to its moving direction, and in which a backlash and tooth hammering noise between the pinion and the rack teeth of the rack bar are not generated, as well as a rack-and-pinion type steering apparatus having such a rack guide.

In a preferred embodiment, the fitting hole portion of the rack guide base body includes a large-diameter recess having a larger diameter than a diameter of the projecting portion of the slider, a fitting hole communicating with the large-diameter recess and having a smaller diameter than the diameter of the large-diameter recess so that the projecting portion of the slider is fitted therein with an interference, and a small-diameter hole having a smaller diameter than the diameter of the fitting hole and communicating with the fitting hole at one end thereof and with the hollow portion at another end thereof, and the other end of the passage means communicates with the hollow portion of the rack guide base body through the fitting hole and the small-diameter hole. Furthermore, the first groove extends in the axial direction, and the second groove extends in a sliding direction of the sliding surface such that the other end thereof is open at the outer peripheral edge of the slider body in the sliding direction or extends in a direction perpendicular to the sliding direction of the sliding surface such that the other end thereof is open at the outer peripheral edge of the slider body in the direction perpendicular to the sliding direction of the sliding surface, the first groove forming a vertical passage as the projecting portion is fitted into the fitting hole, the second groove forming a transverse passage communicating with the vertical passage as the fixing surface of the slider body is brought into contact with the supporting surface of the rack guide base body.

In another preferred embodiment, at least two annular elastic members are included, and the rack guide base body has in the outer peripheral surface thereof at least two annular grooves spaced apart in the axial direction, the annular elastic members being respectively fitted in the annular grooves. In this example, it is possible to satisfactorily suppress the swinging motion of the rack guide base body.

A rack-and-pinion type steering apparatus in accordance with the present invention comprises: a rotatable pinion; a rack bar which has rack teeth meshing with the pinion and is linearly movable; a gear box which rotatably supports the pinion; the above-described rack guide which slidably supports the rack bar; and resilient means for pressing the rack guide toward the pinion.

As the slider, it is suitable to use one which is formed of a synthetic resin material such as a polyacetal resin or a polyamide resin, or a multilayered material consisting of a steel sheet, a porous metal sintered layer deposited and formed integrally on this steel sheet, and a synthetic resin layer impregnating and coated on this porous metal sintered layer and formed of a synthetic resin such as a polyacetal resin, a polyamide resin, or a polytetrafluoroethylene resin. In particular, it is preferable to use one which is formed integrally by subjecting a plate-like material consisting of such a multilayered material to press forming.

### ADVANTAGES OF THE INVENTION

According to the present invention, it is possible to provide a rack guide which can prevent the sealed air chamber from being formed between the cylindrical portion of the gear box and the end face of the rack guide, is hence able to move speedily in the axial direction with respect to the cylindrical portion, is able to respond to the displacement of the rack bar in the radial direction perpendicular to its moving direction, and in which a backlash and tooth hammering noise between the pinion and the rack teeth of the rack bar are not generated, as well as a rack-and-pinion type steering apparatus having such a rack guide.

### BRIEF DESCRIPTION OF THE DRAWINGS

Fig. 1 is an explanatory cross-sectional view of a preferred embodiment in accordance with the invention;
Fig. 2 is an explanatory cross-sectional view of a rack guide shown in Fig. 1;
Fig. 3 is an explanatory cross-sectional view, taken in the direction of the arrows along line III - III, of the rack guide shown in Fig. 2;
Fig. 4 is an explanatory plan view of the rack guide shown in Fig. 1;
Fig. 5 is an explanatory plan view of a rack guide base body shown in Fig. 1;
Fig. 6 is an explanatory plan view of a slider shown in Fig. 1;
Fig. 7 is an explanatory bottom view of the slider shown in Fig. 1;
Fig. 8 is an explanatory front elevational view of the slider shown in Fig. 1;
Fig. 9 is an explanatory side elevational view of the slider shown in Fig. 1;
Fig. 10 is an explanatory perspective view of the slider shown in Fig. 1;
Fig. 11 is an explanatory cross-sectional view of the rack guide in accordance with another preferred embodiment of the invention;
Fig. 12 is an explanatory cross-sectional view, taken in the direction of the arrows along line XII - XII, of the rack guide shown in Fig. 11;
Fig. 13 is an explanatory bottom view of the slider shown in Fig. 11; and
Fig. 14 is an explanatory perspective view of the slider shown in Fig. 11.

### MODE FOR CARRYING OUT THE INVENTION

Hereafter, a more detailed description will be given of the mode for carrying out the invention with reference to the preferred embodiments illustrated in the drawings. It should be noted that the invention is not limited to these embodiments.

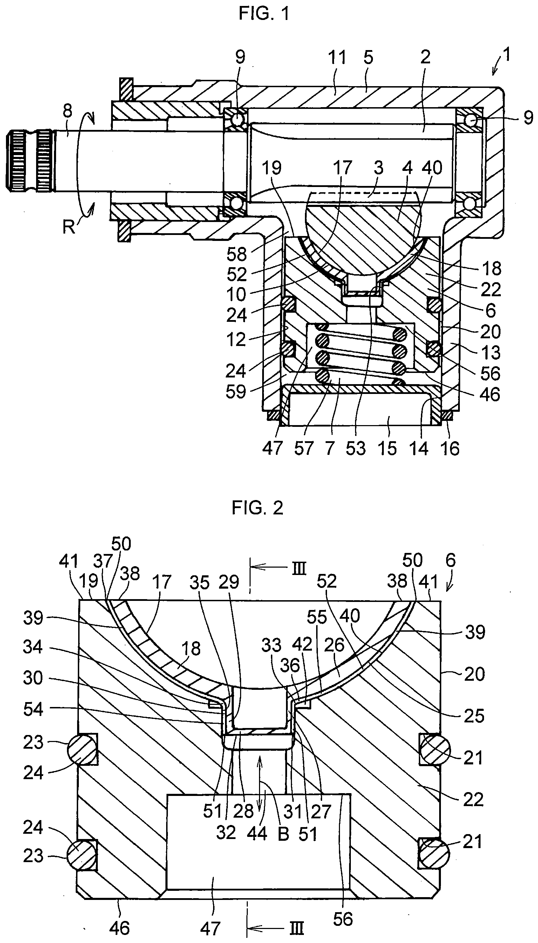

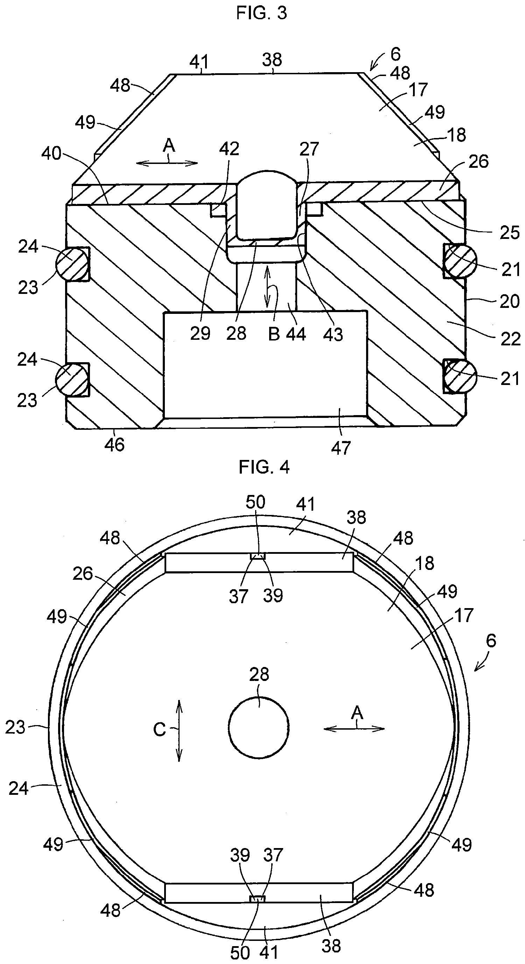

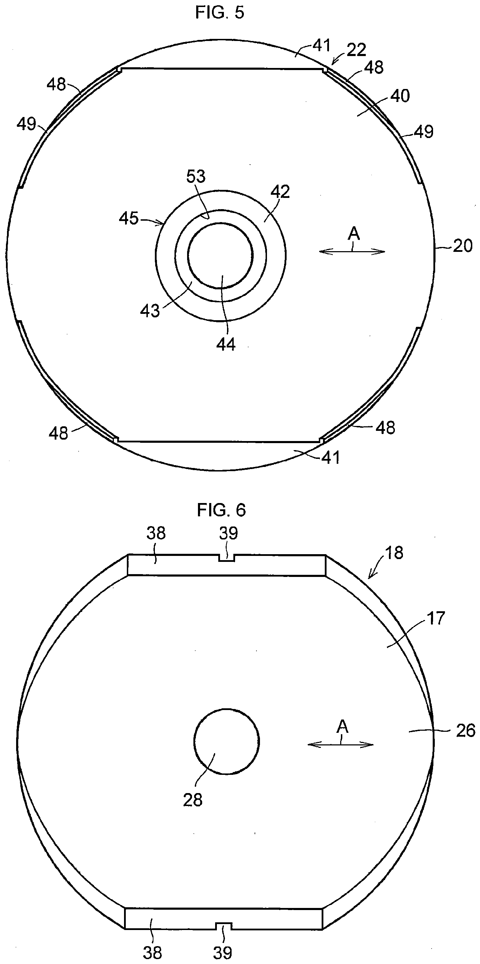

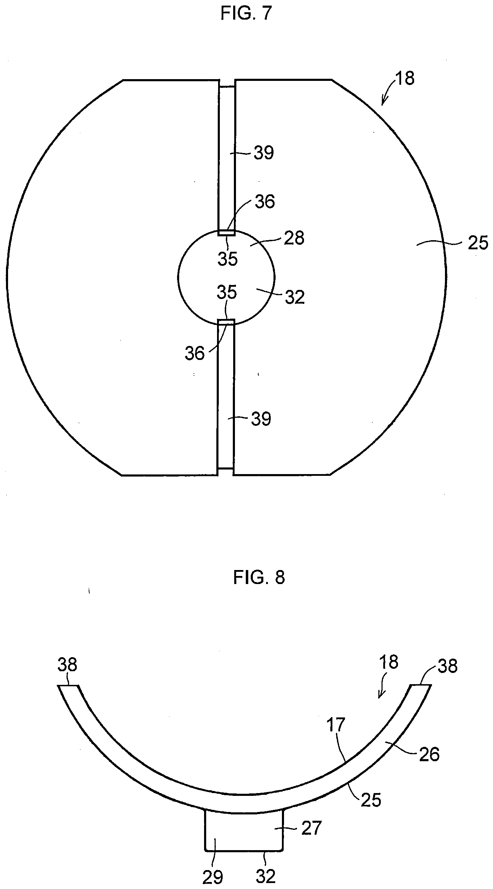

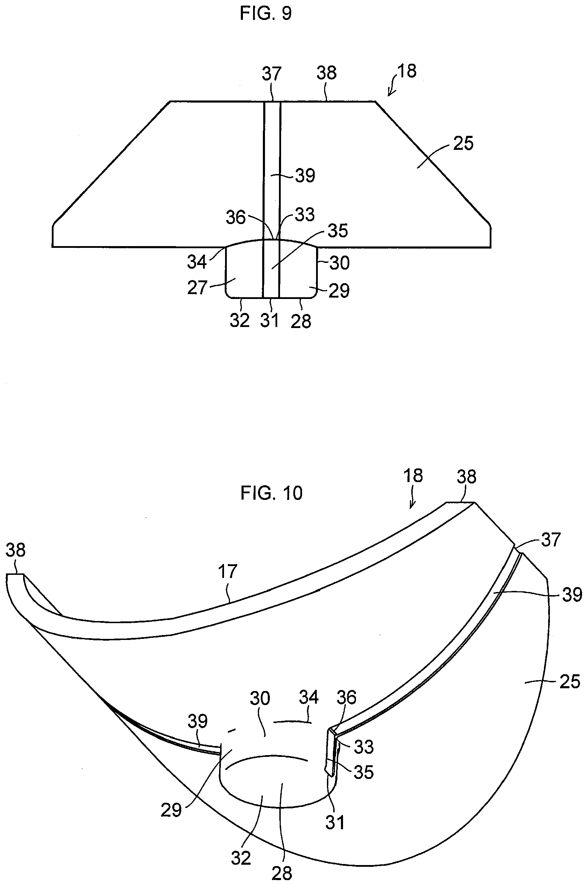

In Figs. 1 to 10, a rack-and-pinion type steering apparatus 1 in accordance with this embodiment is comprised of a pinion 2 which is rotatable in an R direction; a rack bar 4 which has rack teeth 3 meshing with the pinion 2 and is linearly movable in a sliding direction A (a direction perpendicular to the plane of the drawing in Fig. 1); a gear box 5 for rotatably supporting the pinion 2 in the R direction; a rack guide 6 for slidably supporting the rack bar 4; and a resilient means 7 for pressing the rack guide 6 toward the pinion 2.

A pinion shaft 8 with the pinion 2 provided integrally therewith is supported in the gear box 5 rotatably in the R direction by means of a ball bearing 9, and is adapted to be rotated in the R direction by a steering operation.

The rack bar 4, which is moved linearly in the sliding direction A through meshing between the pinion 2 and the rack teeth 3 by the rotation of the pinion 2 in the R direction, has a sliding surface 10 constituted by a semicylindrical convex surface on the side opposite to the surface where the rack teeth 3 are provided.

The gear box 5 through which the rack bar 4 penetrates in the sliding direction A includes a gear box body 11 with the ball bearing 9 provided therein; a cylindrical portion 13 formed integrally with the gear box body 11 and having a cylindrical inner peripheral surface 12; and a closure member 15 which is threadedly secured to one end portion of the cylindrical portion 13 through a threaded portion 14, the closure member 15 being fixed to the cylindrical portion 13 by a lock nut 16 threadedly secured to the closure member 15.

The rack guide 6 includes a slider 18 having a sliding surface 17 which is in slidable contact with the sliding surface 10 of the rack bar 4 and is constituted by a semicylindrical concave surface; a rack guide base body 22 which supports the slider 18 at one end face 19 thereof in an axial direction B perpendicular to the sliding direction A, and has two annular grooves 21 formed in an outer peripheral surface 20 and spaced apart in the axial direction B; and two annular elastic members 24 which are constituted by O-rings or the like and are respectively fitted in the annular grooves 21 of the rack guide base body 22 in such a manner as to project from the outer peripheral surface 20 of the rack guide base body 22 and which, at outer peripheral surfaces 23 thereof projecting from the outer peripheral surface 20 of the rack guide base body 22, are brought into contact with the inner peripheral surface 12 of the cylindrical surface 13 of the gear box 5.

The slider 18, which is formed of a thin steel plate, a porous metal sintered layer integrally coated and formed on one surface of this thin steel plate, and a synthetic resin layer with which this porous metal sintered layer is impregnated and coated, said slider 18 being a curved plate with a synthetic resin layer side thereof curved inward, includes a slider body 26 having on one surface thereof the sliding surface 17 and having on the other surface opposite to the sliding surface 17 a fixing surface 25 constituted by a semicylindrical convex surface; a bottomed cylindrical projecting portion 29 which has a cylindrical portion 27 formed integrally with the fixing surface 25 of the slider body 26 and a bottom portion 28 formed integrally with one end portion of the cylindrical portion 27, and is formed integrally with that fixing surface 25; a pair of grooves 35 which serve as a pair of vertical grooves and are respectively formed in an outer peripheral surface 30 of the cylindrical portion 27 of the projecting portion 29 in such a manner as to respectively extend in the axial direction B and oppose each other with the axis of the cylindrical portion 27 interposed therebetween, such that respective one ends 31 thereof are open at one surface 32 of the bottom portion 28, while the respective other ends 33 thereof are located at a root portion 34 of the projecting portion 29; and a pair of grooves 39 which serve as a pair of transverse grooves and are respectively formed in the fixing surface 25 of the slider body 26 in such a manner as to respectively extend in a direction C perpendicular to the sliding direction A, such that respective one ends 36 thereof communicate with the respective ends 33 of the grooves 35, while the respective other ends 37 thereof are open at respective flat surfaces 38 serving as outer peripheral edges of the slider body 26 in the direction C perpendicular to the sliding direction A.

The rack guide base body 22, which is disposed in the cylindrical portion 13 of the gear box 5 and is formed of aluminum, an aluminum alloy material, a sintered metal material, or the like, and which has the two annular grooves 21 on the outer peripheral surface 20 thereof, includes the one end face 19 in the axial direction B having a supporting surface 40 constituted by a semicylindrical concave surface for supporting the slider body 26 and a pair of crescent-shaped flat surfaces 41 continuous to the supporting surface 40 and flush with the flat surfaces 38; a fitting hole portion 45 which is open in a central portion of the supporting surface 40 and includes a circular large-diameter recess 42 having a larger diameter than the outside diameter of the cylindrical portion 27 of the projecting portion 29 of the slider 18, a fitting hole 43 communicating with the large-diameter recess 42 and having a smaller diameter than the diameter of the large-diameter recess 42 so that the cylindrical portion 27 of the projecting portion 29 of the slider 18 is fitted therein with an interference, and a small-diameter hole 44 communicating with the fitting hole 43 at one end thereof and having a smaller diameter than the fitting hole 43; a hollow portion 47 which communicates with the small-diameter hole 44 and is open at the other end face 46 in the axial direction B of the rack guide base body 22; and four protrusions 48 provided integrally with both edge portions in the sliding direction A of the supporting surface 40 along the supporting surface 40 and having uniform height.

The slider 18 is held and fixed on the supporting surface 40 by press-fitting the cylindrical portion 27 of the projecting portion 29 into the fitting hole 43 and by bringing the fixing surface 25 into contact with the supporting surface 40 and engaging the outer peripheral edges of the slider body 26 with the protrusions 48. In the rack guide 6 including the rack guide base body 22 having the fitting hole portion 45 which is open at the supporting surface 40 on one side thereof and communicates with the hollow portion 47 on the other side thereof and in which the projecting portion 29 of the slider 18 is fitted as well as the slider 18 fitted to and held by the rack guide base body 22, the sliding surface 17 of the slider body 26 is located closer to the sliding surface side 10 side than upper surfaces 49 of the four protrusions 48.

With the slider 18 fitted to and held on the supporting surface 40 of the rack guide base body 22, the bottom portion 28 plays a role as a reinforcing portion for holding the shape of the cylindrical portion 27, so that the projecting portion 29 is held securely in the fitting hole 43 of the rack guide base body 22 over a long period of time. Since the slider body 26 is engaged with the four protrusions 48 of the rack guide base body 22, the slider body 26 is held on the rack guide base body 22 without positionally deviating from the supporting surface 40 of the rack guide base body 22.

In the rack guide 6, a passage means 52, which, at one ends 50 thereof also serving as the ends 37 of the grooves 39, is open at the flat surfaces 38 serving as the outer peripheral edges of the slider body 26 and which, at the other ends 51 thereof also serving as the ends 31 of the grooves 35, communicates with the hollow portion 47 of the rack guide base body 22 through the fitting hole 43 and the small-diameter hole 44, consists of the pair of grooves 35 and the pair of grooves 39, and allows the interior of the cylindrical portion 13 on the flat surface 38 side and the interior of the cylindrical portion 13 on the end face 46 side to communicate with each other.

In the passage means 52, as the projecting portion 29 is fitted in the fitting hole 43, each groove 35 forms a vertical passage 54 defined by an inner peripheral surface 53 of the rack guide base body 22 defining the fitting hole 43, while, as the fixing surface 25 of the slider body 26 is brought into contact with the supporting surface 40 of the rack guide base body 22, each groove 39 forms a transverse passage 55 defined by the supporting surface 40 and communicating with the vertical passage 54.

The annular elastic members 24 are disposed in contact with the inner peripheral surface 12 of the cylindrical portion 13 in the interval in the axial direction B between the one end 50 of the passage means 52 which is open at the flat surface 38 of the slider body 26 and the other end face 46 in the axial direction B of the rack guide base body 22.

The resilient means 7 has a coil spring 57 which is disposed between the rack guide base body 22 and the closure member 15 and is compressed such that the coil spring 57 at one end thereof is in contact with an annular surface 56 of the rack guide base body 22 defining the hollow portion 47 while the coil spring 57 at the other end thereof is in contact with the closure member 15. The coil spring 57 resiliently presses the sliding surface 17 of the slider 18 against the sliding surface 10 of the rack bar 4 through the rack guide base body 22.

With the above-described rack-and-pinion type steering apparatus 1, when the pinion shaft 8 is rotated in the R direction in the steering operation, the rack bar 4 is moved linearly in the sliding direction A through the meshing between the pinion 2 and the rack teeth 3. As a result, the steering operation can be transmitted to automobile wheels connected to the rack bar 4. In the rack-and-pinion type steering apparatus 1, the rack guide 6 is adapted to guide the linear motion in the sliding direction A of the rack bar 4 by coming into contact with the sliding surface 10 of the rack bar 4 at its sliding surface 17, and to secure the meshing between the pinion 2 and the rack teeth 3 by the resiliency of the resilient means 7. Moreover, the rack guide 6 is adapted to move in the axial direction B by being accompanied by the extension and contraction of the resilient means 7 by following the very small displacement in the axial direction B of the rack bar 4.

According to the rack guide 6, since the annular elastic members 24 fitted in the two annular grooves 21 of the rack guide base body 22 are adapted to contact the inner peripheral surface 12 of the cylindrical portion 13 of the gear box 5 at their outer peripheral surfaces 23 projecting from the outer peripheral surface 20 of the rack guide base body 22, it is possible to eliminate the direct contact of the rack guide base body 22 with respect to the cylindrical portion 13. Moreover, since the passage means 52 allows a space 58 in the cylindrical portion 13 on the flat surface 38 side to communicate with a space 59 between the end face 46 and the closure member 15, it is possible to allow the space 58 and the space 59 separated by the annular elastic members 24 to communicate with each other, thereby making it possible to prevent a sealed air chamber from being formed between the closure member 15 inside the cylindrical portion 13 of the gear box 5 and the end face 46 in the axial direction B of the rack guide 6. Hence, it becomes possible for the rack guide 6 to instantly move in the axial direction B with respect to the inner peripheral surface 12 of the cylindrical portion 13 of the gear box 5 by following the very small displacement in the axial direction B of the rack bar 4. In consequence, it is possible to constantly ensure close meshing between the pinion 2 and the rack teeth 3, thereby making it possible to eliminate the occurrence of backlash between the pinion 2 and the rack teeth 3 and the occurrence of abnormal noise due to the teeth collision.

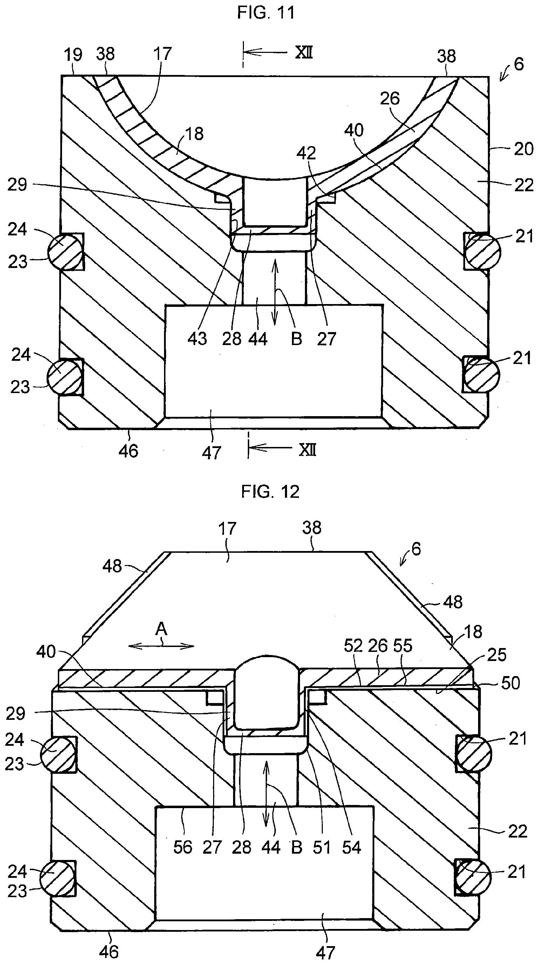

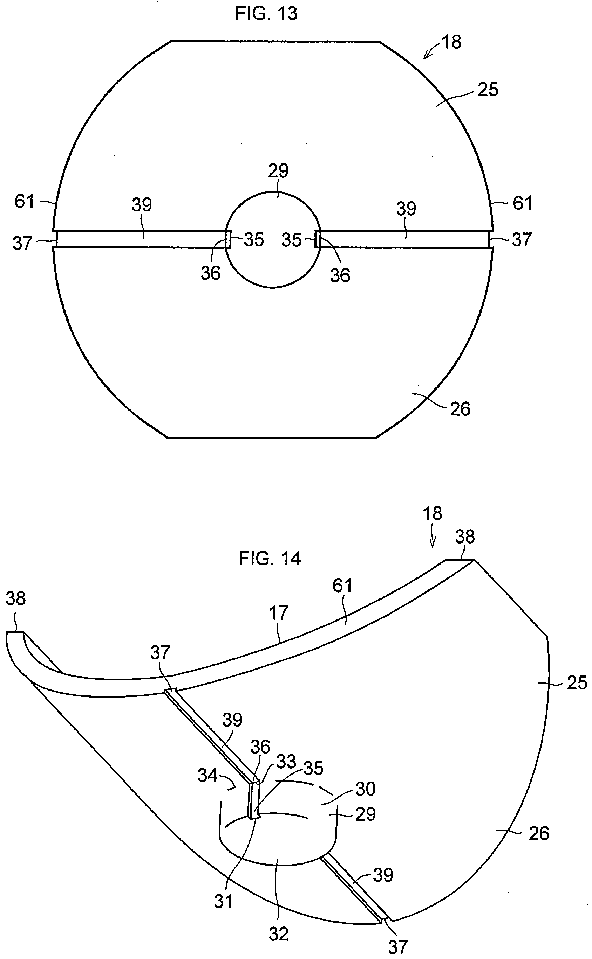

Although the aforementioned passage means 52 has, in addition to the pair of grooves 35 for forming the vertical passages 54, the pair of grooves 39 for forming the transverse passages 55 in which the other ends 37 are open at the flat surfaces 38 serving as the outer peripheral edges of the slider body 26 in the direction C perpendicular to the sliding direction A and which extend in the direction C, the passage means 52 may alternatively have, in addition to the pair of grooves 35, a pair of grooves 39 which serve as the pair of transverse grooves and are respectively formed in the fixing surface 25 of the slider body 26 in such a manner as to respectively extend in the sliding direction A, such that the respective one ends 36 thereof communicate with the respective ends 33 of the grooves 35, while the respective other ends 37 thereof are open at respective outer peripheral edges 61 of the slider body 26 in the sliding direction A, as shown in Figs. 11 to 13. In this case as well, the grooves 35 may form the vertical passages 54, and the grooves 39 may form the transverse passages 55.

Furthermore, the rack guide 6 may have the passage means 52 constituted by single grooves 35 and 39, or three or more grooves 35 and 39, in substitution of the passage means 52 constituted by the pairs of grooves 35 and 39. In addition, instead of extending in the sliding direction A or the direction C, the groove 39 may extend in a direction perpendicular thereto.

### DESCRIPTION OF REFERENCE NUMERALS

- 1:: rack-and-pinion type steering apparatus
- 2:: pinion
- 3:: rack teeth
- 4:: rack bar
- 5:: gear box
- 6:: rack guide
- 7:: resilient means
- 10:: sliding surface
- 13:: cylindrical portion
- 17:: sliding surface
- 18:: slider
- 19, 46:: end face
- 20:: outer peripheral surface
- 21:: annular groove
- 22:: rack guide base body
- 24:: annular elastic member
- 25:: fixing surface
- 29:: projecting portion
- 35, 39:: groove
- 52:: passage means

## Claims

1. A rack guide comprising:
a slider including a slider body having a sliding surface on one surface thereof and a fixing surface on another surface thereof and a projecting portion formed integrally with the fixing surface;
a rack guide base body including one axial end face having a supporting surface, an axial other end face, a hollow portion which is open at the other end face, and a fitting hole portion which is open at the supporting surface on one side thereof and communicates with the hollow portion on another side thereof and in which the projecting portion of said slider is fitted;
at least one annular elastic member fitted on said rack guide base body in such a manner as to radially project from a radially outer peripheral surface of said rack guide base body; and
passage means having one end open at an outer peripheral edge of the slider body and another end communicating with the hollow portion of said rack guide base body,
wherein said slider has the fixing surface in contact with the supporting surface of said rack guide base body and is fixed to said rack guide base body at the fixing surface,
said annular elastic member is disposed between the one end of said passage means and the other end face of said rack guide base body, as viewed in an axial direction, and
said passage means includes a first groove formed in an outer peripheral surface of the projecting portion of said slider and a second groove formed in the fixing surface of the slider body and having one end communicating with the first groove and another end open at the outer peripheral edge of the slider body.

2. The rack guide according to claim 1, wherein the fitting hole portion of said rack guide base body includes a large-diameter recess having a larger diameter than a diameter of the projecting portion of said slider, a fitting hole communicating with the large-diameter recess and having a smaller diameter than the diameter of the large-diameter recess so that the projecting portion of said slider is fitted therein with an interference, and a small-diameter hole having a smaller diameter than the diameter of the fitting hole and communicating with the fitting hole at one end thereof and with the hollow portion at another end thereof, and the other end of said passage means communicates with the hollow portion of said rack guide base body through the fitting hole and the small-diameter hole.

3. The rack guide according to claim 1 or 2, wherein the first groove extends in the axial direction, and the second groove extends in a sliding direction of the sliding surface such that the other end thereof is open at the outer peripheral edge of the slider body in the sliding direction of the sliding surface or extends in a direction perpendicular to the sliding direction of the sliding surface such that the other end thereof is open at the outer peripheral edge of the slider body in the direction perpendicular to the sliding direction of the sliding surface, the first groove forming a vertical passage as the projecting portion is fitted into the fitting hole, the second groove forming a transverse passage communicating with the vertical passage as the fixing surface of the slider body is brought into contact with the supporting surface of said rack guide base body.

4. The rack guide according to any one of claims 1 to 3 includes at least two annular elastic members, and said rack guide base body has in the outer peripheral surface thereof at least two annular grooves spaced apart in the axial direction, the annular elastic members being respectively fitted in the annular grooves.

5. A rack-and-pinion type steering apparatus comprising:
a rotatable pinion;
a rack bar which has rack teeth meshing with said pinion and is linearly movable;
a gear box which rotatably supports said pinion and has a cylindrical portion and a closure member for closing an open end of the cylindrical portion;
said rack guide according to any one of claims 1 to 4 which is fitted in the cylindrical portion of said gear box so as to slidably support said rack bar; and
resilient means for pressing said rack guide toward said pinion.
